# EUROPEAN PATENT APPLICATION

(11) **EP 4 686 602 A1**
(43) Date of publication of application: **04.02.2026**
(21) Application number: 25191359.6
(22) Date of filing: 23.07.2025
(51) Int. Cl.: B60L 53/31, B60L 53/37, B60L 53/65, B60L 53/67

(54) **SAFETY METHOD AND APPARATUS FOR PARKING AND/OR CHARGING LOTS**

(30) Priority: 30.07.2024 DE 102024121678
(71) Applicant: Danzi-Innovative Sarl, 1630 Bulle (CH)
(72) Inventor: Danzi, Frédéric, 1630 Bulle (CH); Essig, Aurélien Pierre, 1091 Grandvaux (CH); Simons, Gerd Werner, 8006 Zürich (CH)
(74) Representative: Lindemann, Robert

(57) **Abstract**

A method of detecting battery fires of an electric or hybrid vehicle comprises taking thermal images of an underside of the vehicle for recognising vehicles with combustion engines and electric or hybrid vehicle and for tracking a thermal profile over time of high-temperature areas. Various modes of operation provide, inter alia, energy-saving regular surveillance and high precision surveillance in case of irregular thermal profiles.

## Description

### FIELD OF THE INVENTION

The present invention relates to safety methods and apparatus for monitoring parking and/or charging lots for vehicles.

### BACKGROUND

Modern cars, in particular hybrid and fully electric vehicles, contain batteries storing increasingly large amounts of electrical energy for propulsion. Due to the steady increase in the batteries' energy density, the potential for damage likewise rises if such battery catches fire. A so-called battery burnout is very difficult to control and extinguish, notably with most types of current lithium based batteries.

If a battery catches fire despite all precautions, water is the first method of choice for controlling the fire, but does not do much for directly extinguishing the burning battery, as lithium floats on water and even continues to burn when in contact with it. While it is possible to extinguish a lithium battery fire by completely submerging the car - and the battery - in water, this is often an unrealistic option in multi-story parking lots. However, water can still help, as it protects surrounding objects and surfaces from fire.

For extinguishing burning lithium batteries special extinguishers are required. So-called AVD extinguishers are filled with gel or silicate. The ingredients cool or harden immediately and at the same time deprive the fire of oxygen. This is important, as battery fires can flare up again and again. Toxic vapours, which are also produced in battery fires, can be confined when the gel or silicate forms a closed barrier.

Smothering battery fires with blankets, sand, or other extinguishing agents does not provide satisfying results, as the thermal energy must be removed from the chemical processes, i.e., the chemical processes must be cooled, in order to effectively extinguish the fire. As the oxygen required for the combustion process is already chemically bound in the cells covering or smothering the source of the fire will not suffice.

If a battery fire occurs on an open street, the battery burnout will remain a local event and most likely only damage the immediately affected vehicle. The probability of larger damages is much higher if a battery fire occurs in a public or private garage with probably hundreds of cars parked next to each other, or in places with combustible material nearby.

Most battery fires are caused by mechanical damage to battery cells. In most vehicles the batteries, which are rather heavy, are arranged near the vehicle's underside in order to keep the centre of gravity as low as possible. This exposes the batteries to damage unless protected by appropriate measures. However, despite all protective measures, during driving rocks might be slammed against the car's underside, where the battery pack is located, or the chassis of the vehicle may be twisted when driving over extremely uneven terrain, and the battery pack in the chassis may be damaged. This kind of damage to the battery or its ancillary systems such as cooling and heating need not necessarily immediately start a fire; rather, the damaged battery may slowly deteriorate and eventually start burning when the required conditions are coming together. Other causes for battery fires are thermal runaway conditions due to overcharging or malfunctioning of the battery management system.

Like any other primary cell or battery, a rechargeable battery has two volumes, one on the anode side and one on the cathode side. The charge carriers - in this case, the lithium ions - flow back and forth between these two volumes, in one direction or the other, depending on whether the battery is being discharged or charged. To ensure that this happens in a controlled manner a so-called separator, a semi-permeable partition wall, is arranged between the volumes. Semi-permeable means that only the charge carriers in the battery - i.e. the lithium ions - can penetrate the separator, and only slowly and in controlled amounts.

If the separator is damaged - whether due to excessive heat, mechanical penetration, or simply due to a production error - this partition wall becomes more permeable to the lithium ions as it should be. In other words, there is a short circuit. This causes the lithium ions to migrate very quickly between the two volumes of the battery, and chemical reactions occur very quickly, releasing a lot of energy in a short time, which cannot be lead away and dissipated quickly enough from the battery. This leads to a chain reaction: Firstly, the hotter the battery gets, the more likely the separator is to break down, and secondly, the faster the reactions take place the higher the temperature rises. In the course of a thermal runaway of a battery temperatures of over 1,000 °C can easily occur, which will ignite many other materials that are found in modern vehicles, eventually incinerating the entire vehicle.

Currently, parking lots are provided with a number of fire detector and extinguisher systems that are mostly configured for "conventional" vehicle fires. These systems comprise smoke detectors, heat detectors, carbon monoxide (CO) detectors, thermal cameras and sprinkler systems.

Smoke detectors are the most common devices and detect the presence of smoke in the air, which can indicate the start of a fire. They are often used in underground parking lots where ventilation is limited.

Heat detectors are used for identifying a rapid rise in air temperature in case of a fire. These detectors may be more appropriate in environments where the presence of dust and exhaust gases could make smoke detectors less effective.

CO detectors can serve as early indicators of an incipient fire, especially in enclosed parking lots where vehicles are often in motion, as CO is a by-product of combustion.

Although not suitable for detecting fires on their own, sprinkler systems can control and often extinguish a fire before the fire department arrives, especially in enclosed areas such as underground parking lots.

Thermal cameras can detect abnormal temperature variations and are useful for monitoring large areas, such as open parking lots or multi-story car parks. However, current installations only observe cars from the side or from the top, which limits their capability of detecting fires starting at the underside of a vehicle.

There is, thus, a need for a method and a system that provides an improved detection of battery fires from electrical or hybrid vehicles.

### SUMMARY OF THE INVENTION

This need is addressed by the method of claim 1 and the system of claim 9. Advantageous embodiments and developments of the method and the system are provided in the respective dependent claims. A computer program product and a computer-readable medium or data carrier are provided in claims 11 and 12, respectively.

In accordance with a first aspect of the present invention a method of detecting battery fires of an electric or hybrid vehicle (EV) in a parking lot comprises a first and a second mode of operation. In the first mode of operation a detection is carried out for determining if an occupation status of the parking lot changes from empty to occupied, i.e., if a vehicle is parked in the previously empty parking lot. In the positive case a corresponding signal is generated. The first mode of operation may further comprise detecting continued occupation of the parking lot, i.e., that the vehicle is still present, and detecting that the parking lot is vacated, i.e., that the previously parked vehicle has left the parking lot. The signal is used as a trigger for entering the second mode of operation. Note that throughout this specification the abbreviation EV is used for both fully electric vehicles and hybrid vehicles unless explicitly stated otherwise or readily apparent from the respective context.

The second mode of operation, entered upon receiving the signal indicating that the occupation status of the parking lot has changed from empty to occupied, comprises executing one or more first-type scans via a thermal sensor over a first field of view for obtaining a corresponding first-type thermal image. The thermal sensor may comprise any kind of sensor that can detect temperatures, including a camera that is capable of detecting a thermal image covering the first field of view, or a sensor that scans the first field of view for obtaining a complete thermal image. The first field of view may be characterised by a solid angle captured by the sensor and may have a rectangular or other shape. The first field of view is expediently directed upward from the ground of the parking lot, i.e., is directed to an underside of a vehicle parked in the parking lot. The obtained first-type thermal image is then evaluated for identifying contiguous high-temperature pixel clusters therein. Based on the first-type scan the method determines whether the parked vehicle is an EV. Determining may comprise capturing several thermal images over time and analysing the distribution, or changes thereof, of the high-temperature pixel clusters. A rapid cooling, i.e., a rapid shrinking of the number of contiguous high-temperature pixel in the clusters provides a strong indication that the vehicle is equipped with a combustion engine, while a slower shrinking and/or an evenly distributed decrease of the temperature in the contiguous cluster provide a strong indication that the vehicle is an EV. Likewise, the distribution of the contiguous high-temperature pixels can indicate the presence of a combustion engine, e.g., when a narrow cluster of high-temperature pixels extends over a longer stretch of the vehicle, this can be interpreted as an exhaust pipe.

If the parked vehicle is not an EV, i.e., if the determining step provides a negative result, the method may return to the first mode of operation, and remain in the first mode until receiving a new signal indicating that the parking lot had been vacated and newly occupied.

If the parked vehicle is an EV, i.e., in case the determining step provides a positive result, a third-type mode is entered, coming from the second mode of operation, in which the method comprises identifying a region within the first field of view of the thermal image for subsequent supervision. In one or more embodiments identifying a region within the first field of view of the obtained thermal image for subsequent supervision comprises identifying a contiguous high-temperature pixel cluster in the obtained thermal image having the highest temperature. The subsequent supervision comprises performing, at first time intervals, second-type scans over a second field of view including the identified region, while a temperature of the identified region does not increase, while a temperature in the second field of view outside the identified region is not higher than an ambient temperature by a predetermined first value, and while the parking lot remains occupied. The expression 'time interval' is meant to include time intervals of variable lengths, the length of which being adaptable depending on requirements and/or environmental conditions. The second field of view, which is smaller than the first field of view, may be characterised, like the first field of view, by a solid angle captured by the sensor and may have a rectangular or other shape. The ambient temperature may be provided by a corresponding sensor that may be part of a system implementing the method or by a separate sensor that is external to the system. It is also conceivable to determine an ambient temperature using the thermal sensor of the system implementing the method, e.g., through scans carried out whenever a parking lot is not occupied. The latter embodiment, which may be particularly suitable or useful in parking lots in buildings, exploits the fact that the ambient temperature normally does not change rapidly over time.

The method further comprises a fourth mode of operation that is entered, coming from the third mode of operation, when the temperature of the identified region increases or when the temperature in the second field of view outside the identified region exceeds the ambient temperature by more than the predetermined first value, while the parking lot remains occupied. The fourth mode of operation comprises performing, at second time intervals shorter than the first time intervals previously used while performing second type scans, third-type scans comprising at least the identified region, while a temperature in any region of the area captured by the third-type scans rises or does not fall within a predetermined first number of consecutive third-type scans or within a predetermined first time period, and while the parking lot remains occupied.

When, while in the fourth mode of operation, a temperature in any region of the area captured by the third-type scans rises by or more than a predetermined second value within a predetermined second number of consecutive third-type scans or within a predetermined second time period a first alarm signal is issued. The alarm signal may be issued to different receivers, including a facility manager or the fire brigade.

When, while in the fourth mode of operation, the temperature in any region of the area captured by the third-type scans falls within the predetermined first number of consecutive third-type scans or within the predetermined first time period, while the parking lot remains occupied, the fourth mode of operation is exited, returning to the third mode of operation. This may further include issuing a signal ending a previously triggered alarm.

Note that the first and second time intervals may be adaptively selected from ranges, and the range from which the respective used or applied first time intervals are selected may overlap with the range from which the respective used or applied second time intervals are selected. In the context of this invention the only condition regarding the respective first and second time intervals is that the second time intervals are shorter than the first time intervals.

The change in the occupation status of the parking lot from empty to occupied, and/or the continued occupation of the parking lot, i.e., the continued - and uninterrupted - presence of the vehicle in the parking lot, may be indicated by a signal received from an independent parking surveillance system or a corresponding sensor of a system implementing the method, or by the absence of such signal. In particular a signal indicating the continued occupation of the parking lot may additionally or alternatively be generated by a process that evaluates the first-, second-, third- and fourth-type scans in the respective operating mode. In any of the scans, or rather in a sequence of consecutive scans, a sudden change, most likely a drop, in the temperature in the region identified for supervision by a predetermined third value, may indicate that the parking lot has been vacated.

In one or more embodiments of the method determining whether the parked vehicle is an EV comprises identifying and evaluating a location of one or more contiguous high-temperature pixel clusters within the first field of view of the obtained thermal image. The evaluation may comprise considering that the batteries of EVs, which will be warmer than most other areas of the underside of the EV, are typically located in a central part of the EV's chassis, while combustion engines, which are warmer than most other areas of the underside of the combustion engine vehicle, are typically located in the front. Additionally, for increasing the reliability of the determination, or simply as an alternative solution, changes in temperatures of contiguous pixel cluster over a number of consecutive first-type scans or over a predetermined third time period may be evaluated. The temperature profiles of cooling combustion engines and EV batteries differ significantly, e.g., in the initial temperatures after use, which can be used for this purpose. As mentioned further above, the shape of contiguous high-temperature pixel clusters may also be used for determining presence of an EV. Hot exhaust pipes of combustion engines are typically narrow and elongated, while batteries will typically cover a wider contiguous area. As a further complement or alternative, the determination may comprise receiving a signal indicating that a charging apparatus associated with the parking lot is activated. This latter alternative will permit identifying hybrid vehicles that had been driven using the combustion engine and that are now charging while parking. As battery fires may begin during charging, this further increases the reliability of the method and the system implementing the method.

In one or more embodiments of the method identifying a region within the first field of view of the obtained thermal image for subsequent supervision comprises identifying a contiguous high-temperature pixel cluster in the obtained thermal image having the highest temperature.

In one or more embodiments the method comprises, while in the third mode of operation, shortening the second time intervals with increasing temperature of the identified region.

In one or more embodiments the method comprises, while in the fourth mode of operation, issuing a second alarm signal when a temperature in any region of the area captured by the third-type scans rises by or more than a predetermined third value within a predetermined third number of consecutive third-type scans or within a predetermined third time period after issuing the first alarm signal.

In one or more embodiments the method comprises opening a shutter covering at least the thermal sensor and an associated optical arrangement when entering the second mode of operation, and closing the shutter when returning to the first mode of operation.

In one or more embodiments the method comprises executing a cleaning process for the thermal sensor and/or the associated optical arrangement in predetermined third time intervals and/or when differences between a thermal image captured for an unoccupied parking lot and a reference image exceed respective predetermined thresholds.

In accordance with a second aspect of the invention a system for detecting battery fires of electric or hybrid vehicles (EV) in parking lots is presented. The system comprises a power supply, a vehicle presence sensor, a thermal sensor array and an associated lens system, and may further comprise a temperature sensor and/or a humidity sensor. The system yet further comprises a controller comprising one or more microprocessors or corresponding logic circuits and associated volatile and non-volatile memory, and a communication interface, which may be wired or wireless. The non-volatile memory stores computer program instructions which, when executed by the one or more microprocessors of the controller configure the system to execute embodiments of the method in accordance with the first aspect of the invention.

The methods described hereinbefore may be represented by computer program instructions. Thus, in accordance with a further aspect of the invention, a computer program product comprises computer program instructions which, when executed by a microprocessor or corresponding logic circuits of a controller of a system in accordance with the second aspect of the invention, cause the microprocessor to execute embodiments of the method in accordance with the first aspect of the invention and to accordingly control hardware components of the system.

Computer program instructions, or code, for carrying out operations for embodiments may be any number of lines and may be written in any combination of one or more programming languages including an object- oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN), wireless LAN (WLAN), or a wide area network (WAN), or the connection may be made to an external computer, for example, through the Internet using an Internet Service Provider (ISP).

The computer program instructions may be retrievably stored or transmitted on a computer-readable medium or data carrier. The medium or the data carrier may be tangibly or physically embodied, e.g., in the form of a hard disk, solid state disk, flash memory device, EPROM or EEPROM, or the like. However, the medium or the data carrier may also comprise a modulated electro-magnetic, electrical, or optical signal that is received by the computer by means of a corresponding communication interface, and that is transferred to and stored in a memory of the computer.

The described features, structures, or characteristics of the embodiments may be combined in any suitable manner. In this description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment. Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Where aspects of the embodiments are described in this specification with reference to schematic flowchart diagrams and/or schematic block diagrams of methods, apparatuses, systems, and program products according to embodiments it will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

It should be noted that, in some implementations or embodiments, the functions noted in the exemplary embodiments shown in the figures may occur out of the order shown in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, shown in the figures.

The present invention reduces the risk of fire and the considerable damage caused by an EV on fire in a parking lot, including loss of business due to closure of building, damage to building foundations, and, in the worst case, loss of life. In particular, the method and system in accordance with the invention can detect abnormal temperature rises faster and earlier than conventional solutions. The sensor and method is capable of quickly detecting and perceiving abnormal temperature rises in all types of EVs, including hybrid EVs.

It is readily apparent that the system may also be used in battery-powered trains, boats, or aircrafts.

Field test have shown that a battery runaway leading to a fire can be detected at least 3 minutes prior to the actual battery fire and about 10 minutes earlier than a smoke detector.

### BRIEF DESCRIPTION OF THE DRAWING

In the following section embodiments of the invention will be described with reference to the attached drawings. In the drawings,
- Fig. 1: depicts an exemplary system in accordance with the invention installed in a parking lot for one car,
- Fig. 2: shows a schematic block diagram of an exemplary sensor system,
- Fig. 3: shows an exemplary flowchart of a typical detection process in accordance with the present invention,
- Fig. 4: shows an optional sub-process for lens cleaning that is controlled by a watchdog timer,
- Fig. 5: shows a cross-sectional view of a parked car above a thermal runaway sensor in accordance with the invention,
- Fig. 6: shows a typical curve of the battery temperature while a malfunction occurs during charging, and
- Fig. 7: shows an exemplary block diagram of an apparatus configured for implementing embodiments of the method in accordance with the invention

In the figures, identical reference designators may be used for identical or similar elements or features.

### DETAILED DESCRIPTION OF EMBODIMENTS

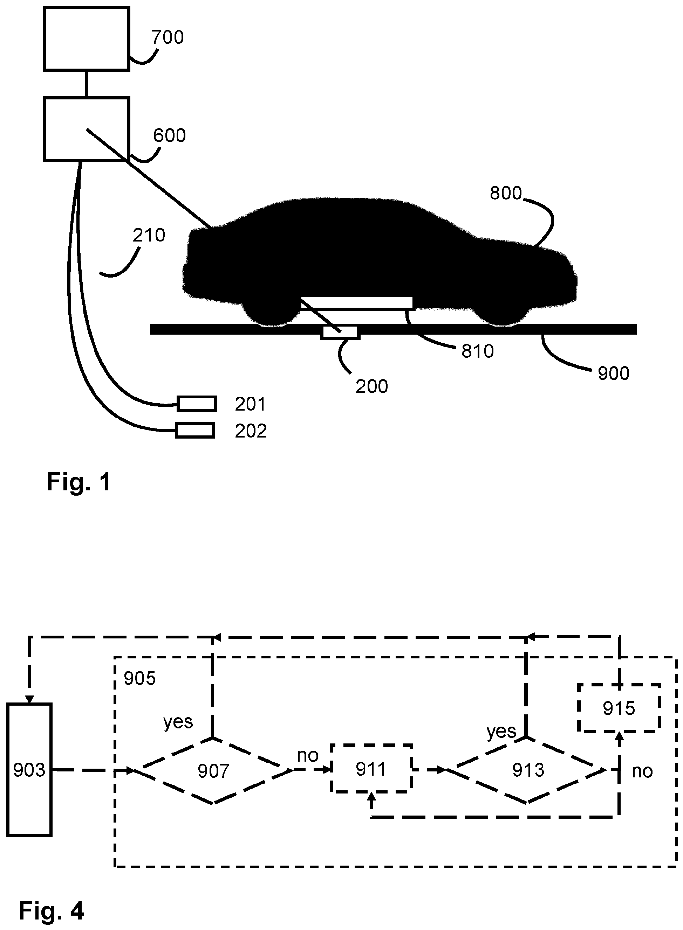

Figure 1 depicts an exemplary system in accordance with the invention installed in a parking lot for one car. All other parking lots may be equipped similarly. A sensor system 200 is integrated into the floor 900. The sensor system 200 is connected to a central unit 600. Likewise further sensor systems 201, 202 are connected to that central unit 600, one for each parking lot. Central unit 600 can be connected with the sensor systems 200, 201, 202 and be configured for transmitting an alarm via communication device 700. Alternatively, central unit 600 can perform some parts of the processing of the sensor data, i.e., thermal images, for evaluating an event of battery runaway of battery 810 of an EV 800 parked in the parking lot. Central unit 600 may also be configured for managing the detection of a car present in the parking lot, e.g., when the sensor systems 200, 201, 202 are used as a thermal sensor as well as a car-presence sensor. Central unit 600 or the sensor system 200 can further be configured for communicating with a charging equipment associated with the parking lot (not shown in the figure) or with a safety switch coupled for selectively interrupting a power supply of the charging equipment (not shown in the figure). The connection 210 between the sensor systems may be wired or wireless. Wireless connections may comprise any low power transmitting system like Bluetooth LE, LORA-WAN etc. In case of a wireless transmission, the sensor system 200 may be self-supplied by either a battery system and/or an energy harvesting system or connected to power over wire.

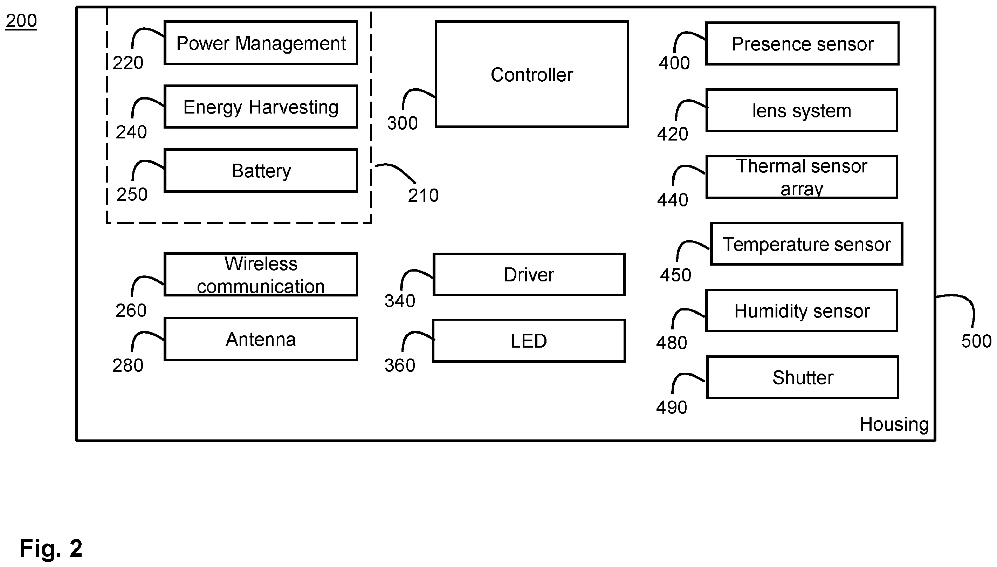

Figure 2 shows a schematic block diagram of an exemplary sensor system 200. Local battery 250 supplies the whole sensor system 200 with energy. The battery 250 may be of a primary or secondary battery type. In case of a secondary type battery an energy harvesting circuit may be provided for 240 charging the battery 250. Various types of energy harvesting circuits are commonly known and may comprise, *inter alia,* a photovoltaic cell or an electromagnetic system receiving energy from the electromagnetic field from the nearby charging currents. Thermal generators are likewise conceivable, which use a temperature difference for generating electrical energy. A power management system 220, under control of controller 300, controls the supply of energy to the various system components. Depending on the controller type, the power management 220 may be integrated into the controller 300. A vehicle presence sensor 400 is provided, which can be of optical, thermal, radar, lidar or any other suitable type. Vehicle presence sensor 400 may generally be of conventional design and type already in use for existing parking systems. Other alternatives like an induction loop or capacitive systems are not excluded. As later shown in the flow chart, the vehicle presence sensor 400 detects the presence of a vehicle and triggers the operation of the sensor system 200.

The sensor system 200 further comprises a lens system 420, which is necessary for controlling the viewing angle of the thermal sensor 440, i.e., widening and/or narrowing. Due to the close viewing distance of a vehicle's underside and the surface of the parking lot, which will typically be in a range of some 10 to 20 cm, a nearly 180 degree viewing angle must be provided in all directions, i.e., nearly a semi-sphere or a semi-ovoid. This can be solved by a traditional lens system or a Fresnel-type lens, by a prism system or a scanning mirror system.

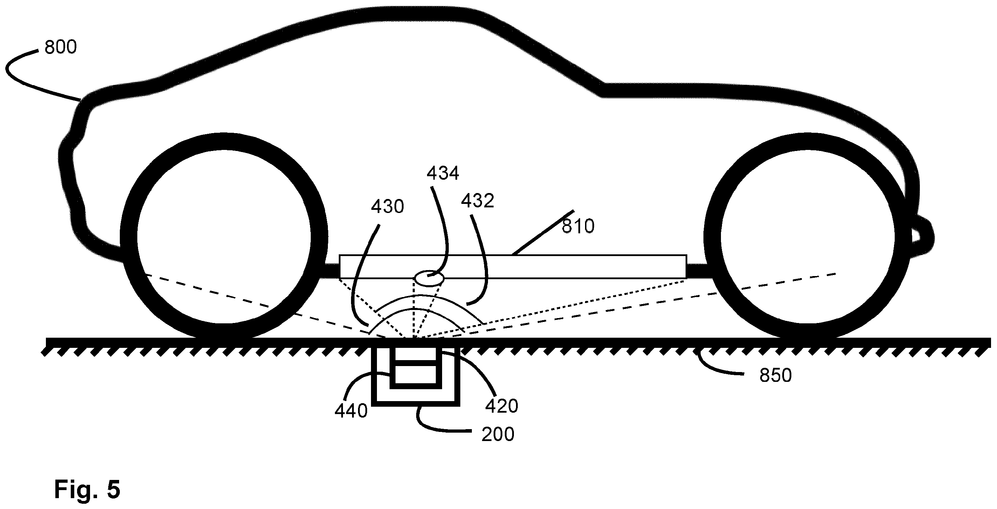

A thermal sensor array 440 is provided, which is essential for measuring the temperature of the underside of a vehicle, which is closest to space where the vehicle's battery 810 is mounted. It may be advantageous if the sensor has more than one pixel, and if those pixels can selectively be activated via controller 300. It is readily apparent that instead of one large thermal sensor several sub-units can be used, which may be distributed across the parking lot. Figure 5 shows an example of various viewing angles 430, 432, 434 of a single thermal sensor array that may be selected by adjusting the lens system, by selecting a subset of pixels from the totality of pixels, by adjusting a scanning system, or the like. Figure 5 also illustrates that for supervising the battery temperature only a part of the pixels of a multi-pixel thermal sensor 440 may be required. The non-used pixels or parts of the multi-pixel thermal sensor can be turned off for energy conservation. Temperature sensor 450 and air humidity sensor 480 may be provided for giving a reference for the air temperature and the humidity in the vicinity of the car. To fully detect the exact temperature gradient of a cooling or heating-up battery, the air temperature and air humidity are important parameters. This measurement need not to be of the precise type and the sensors could be an integrated sensor on a printed circuit board that holds the various electronic components of the system.

A shutter 490 allows covering the optical systems of the sensor system 200 when not in use or when the surface of the parking lot is cleaned. Shutter 490 may also comprise a cleaning mechanism for cleaning the lens system 420. To this end, a movable part of the shutter 490, e.g., a sliding lid or the like, may be equipped with a wiper, a brush or the like that cleans the lenses whenever the shutter 490 opens or closes.

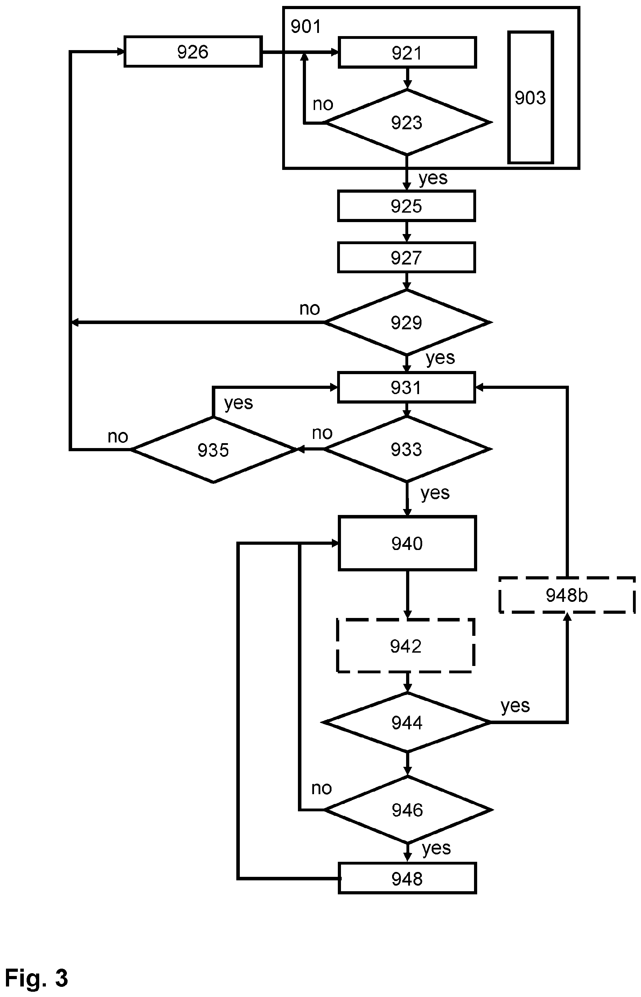

Figure 3 shows an exemplary flowchart of a typical detection process in accordance with the present invention. Block 901 represents a low-power modus for saving energy supplied by a battery and/or energy harvesting. In the low-power mode two functions may be executed:
- a lens cleaning cycle 905 started by watchdog timer 903. The lens-cleaning cycle is described further down with reference to figure 4.
- a car detecting and supervising loop comprising detection step 921 and decision step 923.

In the car detection and supervision loop detection step 921 serves for detecting any car that is parked on a previously empty parking space. This step may comprise using a car presence sensor 400, which may be of conventional design and which may function similar to sensors already known from parking management systems.

Car presence sensor 400 detects whether there is a car above or in the vicinity of the sensor. Using a separate car presence sensor may have the advantage that it uses less power to detect a car than using the thermal sensor 440.

If a car is detected, yes branch of decision step 923, the system enters a second operating mode, in which first the shutter covering the thermal sensor 440 is opened in step 925, and in subsequent step 927 one or more first-type scans are executed by the thermal sensor 440. This first-type scans 927 may be executed continuously or in intervals, e.g., every few minutes. In order to limit the energy used, the full viewing angle 430 of the thermal sensor 440 is evaluated. The first-type scan is also referred to herein as micro-power scan. A region, e.g., a cluster of contiguous pixels, having the highest temperature is identified and selected. Decision step 929 is used to determine whether a car equipped with an combustion engine or an EV is parked.

Detecting the warmest region, the hotspot, i.e., a cluster of pixels in a thermal image captured by the thermal sensor having the highest brightness, may comprise performing thresholding to divide the pixels into bright and dark pixels, and then carry out a connected-component analysis (CCA) to identify and extract connected bright pixel regions. Other methods that can be used in connection with the present invention for identifying the region in the thermal image having the highest temperature include blob detection by using convolution, superpixel detection through applying algorithms like Quickshift image segmentation or watershed segmentation, applying a DBSCAN clustering algorithm that groups together data points that are close to each other and have a high density of neighbouring points, while marking points in low-density regions as noise, and/or applying Connected Component Labeling (CCL), which is a fundamental algorithm in computer vision that assigns a unique number to each connected component of a binary image. Other methods that may be used herein involve using artificial intelligence (AI) for detecting and selecting the region in the thermal image having the highest temperature, e.g., using AI image classification implementing a Convolutional Neural Network (CNN). Finally the largest contiguous high-temperature cluster is selected in accordance with the number of connected pixels and used for further supervision.

As mentioned above, for increasing the reliability of the decision, two or more successive thermal images may be taken at suitably spaced time instants, e.g., one minute, and evaluated. The spacing of the time instants may be dependent on the ambient temperature and may increase with increasing ambient temperature. The two or more successive images are then compared, and regions in which the temperature changed between two thermal images are identified.

Combustion engines and their exhausts can be easily detected by their temperature profile and shape in the thermal image. Temperatures above 100°C may be present after the vehicle is parked and will decrease quickly, several degrees Celsius in ten minutes. If such profile is detected, the system may switch to a mode that merely performs a detection whether this particular vehicle is still present or not, e.g., for an optional parking management system (not shown in the figure). This may be done using the car presence sensor 400. Thus, if a vehicle having a combustion engine is detected, no-branch of decision step 929, the shutter may be closed in step 926, and the method returns to the low-power mode block 901.

If an EV is detected, yes-branch of step 929, a third mode of operation is entered. The third mode of operation comprises performing a regular scan, also referred to as low-power scan, in step 931. The low-power scan may be performed in first time intervals, e.g., every five to ten minutes. The low-power scan observes only the region identified as being associated with a battery, as illustrated in figure 5, viewing angle 432. Next, based on the results of consecutive low power scans, decision step 933 determines if the battery temperature changes in ways that indicate an abnormal situation. If a difference between the car's body temperature and the ambient air temperature does not exceed a predetermined first value, e.g., 10°C, and/or if the battery temperature is still decreasing, the method continues with step 935 after going through the no-branch of step 933. Note that the temperature of the battery can be about 20°C to 30°C above the ambient air temperature, which may be detected by temperature sensor 450. Step 935 merely determines if the car is still present. In the positive case, yes-branch of step 935, the method continues performing low-power scans at intervals. In the negative case, no-branch of step 935, the method returns to the low-power mode block 901, closing the shutter in step 926. It is noted that further checks for temperature hotspots may be executed while in the third more of operation.

If decision step 933 determines that the difference between the car's body temperature and the ambient air temperature exceeds the predetermined first value, or the battery temperature increases, yes-branch of step 933, the method enters a fourth operating mode and continues with step 940.

In step 940 third-type scans are executed at second time intervals that are shorter than the first time intervals, e.g., shorter than one minute. Entering this mode of operation, also referred to herein as fourth mode, implies that the risk of an incident is high and the system thus supervises the battery more frequently and with a higher spatial resolution. The higher spatial resolution allows detecting and tracking smaller hotspots and thus provides deeper information. At this point Artificial Intelligence (AI) may support the observation by use of 2D-deep learning algorithms. Depending on the implementation this rather power consuming algorithms may be run outside of the car detecting system, and the third-type scans may be provided to an external server in step 942, which returns the results to decision step 944. Note that the second time intervals may be automatically adapted as required, i.e., shortened, and that the spatial resolution may likewise be adapted as required. Decision step 944 checks if the temperature the temperature in any region of the area captured by the third-type scans falls within the predetermined first number of consecutive third-type scans or within the predetermined first time period. In the positive case, yes-branch of step 944, the method continues with step 931, effectively returning to the third mode of operation. If an alarm was previously issued in step 948, the alarm may be cleared in step 948b. In the negative case, no-branch of step 944, the method checks, in step 946, if the temperature in any region of the area captured by the third-type scans rises by more than a predetermined second value within a predetermined second number of consecutive third-type scans or within a predetermined second time period. An exemplary critical temperature change is 1°C/minute over a time interval of 5 minutes. In the negative case, no-branch of step 946, the method returns to step 940 and continues taking third-type scans. In the positive case, yes-branch of step 946, a first alarm signal is issued in step 948, and the method returns to step 940 and continues taking third-type scans. Note that the alarm may be repeated or maintained in case the loop comprising steps 940, 942, 944, 946, 948 determines that the temperature still rises. Alternatively, the alarm may only be issued at the first trigger instance. The alarm and the clearing of the alarm may be transmitted, wired or wirelessly, to a supervising system and/or a human supervisor.

Figure 4 shows an optional sub-process 905 for lens cleaning that is controlled by watchdog timer 903. Upon expiry of a predetermined time interval, e.g., once per day, watchdog timer 903 triggers lens cleaning loop 905. In step 907, after opening the shutter 490, a thermal image is taken and compared with a reference image obtained from a memory. The reference image, which may be taken during the installation of the system or at a later time, e.g., after a service or at regular intervals, may be selected in accordance with a current ambient temperature and/or humidity. **If** the images are sufficiently similar, yes-branch of step 907, the sub-process ends and returns to the watchdog timer process 903. If the images are too different, no-branch of step 907, it is assumed that the lens system 420 is dirty, and a lens cleaning process is carried out in step 911. Lens cleaning may comprise repeatedly opening and closing the shutter 490. After the lens cleaning process is terminated, step 913 checks if the lens cleaning was successful, e.g., by repeating the comparison with a current thermal image and a reference image. In the positive case, yes-branch of step 913, the method returns to the watchdog timer process 903. In the negative case, no-branch of step 913, an alarm for maintenance is issued in step 915, and the method returns to the watchdog timer process 903. Alternatively, the lens cleaning process can be repeated in step 911.

Figure 5 shows a cross-sectional view of a parked car above a thermal runaway sensor in accordance with the invention and in particular the optical situation of the thermal sensor 440 together with the lens system 420. All viewing angles can be 1- or 2-dimensional, depending on the thermal sensor pixel array. If the sensor is only 1-dimensional, the lens system has to adopt the viewing angle such that most parts of the car-body is detected. 1-dimensional viewing angles may require scanning the sensor for observing an area. Viewing angle 430, the "full viewing angle" of the sensor, covers most of the car's underside. Due to the extreme relationship of the ground clearance of the car and the length of a car-body, the full viewing angle may be as large as 175°. It is important that the full underside of the car is scanned because the battery can be in different places or installed in multiple parts in 2 or more locations. Viewing angle 432 covers the region identified as the battery region. This region is discovered by the different temperatures and/or by the change of temperature, i.e., temporal temperature profiles. Viewing angle 434 represents a viewing angle for an identified hot-spot. This hot-spot will only be detected when a thermal runaway is starting and is used for better surveillance.

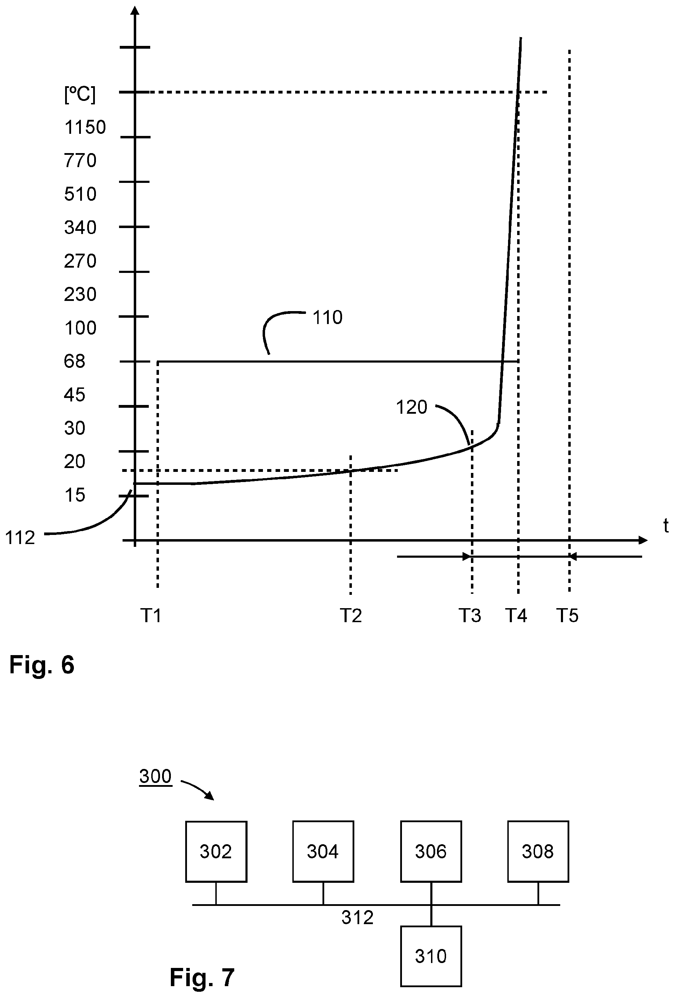

Figure 6 shows a typical curve of the battery temperature while a malfunction occurs during charging. The x-axis is linear, representing the time, and the y-axis is logarithmic, representing the temperature. It is noted that similar malfunctions may also appear during use of a battery or while parked after use. However, the latter malfunctions are difficult to provoke for testing and thus measurements are difficult to obtain for illustrative purposes.

The charging process starts at T1, assuming that the battery is at the ambient temperature 112 of approximately 16°C. The temperature rises slowly due to the chemical processes taking place in the battery and some resistive losses. At T2 the battery temperature has already risen to 18°C. At T3 the rise of temperature has reached a threshold of "1°C/minute for longer the 5 minutes", indicated by the reference numeral 120. At T4 the battery experiences a thermal runaway; the temperature rises rapidly to more than 1000°C. At T5 the battery is effectively on fire, incinerating parts of the car or oily or other flammable liquids, and emits smoke that can be detected by a traditional smoke detector. The heat is still not detectable by a traditional sprinkler-system heat detecting capsule, which is located above the vehicle, because the flames are not yet reaching that far.

The method in accordance with the invention, after identifying that a car has been parked, executes a first-type scan at T1 while in the second mode of operation. The method then enters the third mode of operation at T2, switches to the fourth mode of operation at T3. Experiments have confirmed that the system in accordance with the invention issues an alarm about 10 minutes earlier than a conventional smoke detector, which will only trigger at T5.

Figure 7 shows a schematic block diagram of an exemplary controller 300 of the sensor system 200 in accordance with the invention. The controller 300 comprises interfaces 302 for controlling various system components such as the shutter 490, the thermal sensor 440, the lens system 420 and the like and for communicating alarms to further systems. The controller further comprises one or more microprocessors 306, and associated volatile 308 and non-volatile memory 310. The various components and elements of the controller 300 are communicatively connected via one or more data and/or signal lines or buses 312. The non-volatile memory 310 stores computer program instructions which, when executed by the one or more microprocessors 306, configure the controller 300 to implement or carry out embodiments of the method in accordance with the first aspect pf the invention as described herein.

**LIST OF REFERENCE NUMERALS (PART OF THE DESCRIPTION)**

| | | | |
|---|---|---|---|
| 100 | method | 700 | communication device |
| 110 | temperature | 800 | vehicle |
| 112 | ambient temperature | 810 | battery |
| 120 | 1°C/min exceeded for >5 min. | 850 | ground, parking lot |
| 200 | sensor system | 900 | floor |
| 201 | sensor system | 901 | low-power modus |
| 202 | sensor system | 903 | watchdog timer loop 905 |
| 210 | power supply | 905 | sense cleaning loop |
| 220 | power management | 907 | comparison of current thermal image with reference 909 |
| 240 | energy harvesting circuit | | |
| 250 | battery | 911 | lens cleaning process |
| 260 | wireless communication | 913 | control of lens cleaning |
| 280 | antenna | 915 | alarm output for maintenance |
| 300 | controller | 921 | car detection |
| 302 | interface(s) | 923 | decision step |
| 304 | interface(s) | 925 | open shutter |
| 306 | microprocessor(s) | 926 | close shutter |
| 308 | volatile memory | 927 | micro-power scan by thermal sensor, limited number of pixels |
| 310 | non-volatile memory | | |
| 312 | data/signal line/bus | 929 | selection combustion or electrical engine |
| 340 | driver | | |
| 360 | LED | 931 | low-power scan |
| 400 | vehicle presence sensor | 933 | decision between normal or excessive heating up |
| 420 | lens system | | |
| 430 | viewing angle car bottom | 935 | check if car is still present |
| 432 | viewing angle battery | 940 | third-type scan |
| 434 | Viewing angle "hot-spot" | 942 | indication to external server |
| 440 | thermal sensor array | 944 | alarm threshold (1°C/minute for longer the 5 minutes) |
| 450 | temperature sensor | | |
| 480 | humidity sensor | 946 | check temperature gradient |
| 490 | shutter | 948 | issue alarm |
| 500 | housing | 948b | clear alarm |
| 600 | central unit | 880 | parking management system |

## Claims

1. A method (100) of detecting battery fires of an electric or hybrid vehicle (EV) (800) in a parking lot (850), comprising, in a first mode of operation,
- detecting (921, 923) if an occupation status of the parking lot (850) changes from empty to occupied, and generating a corresponding signal,
and further comprising, in a second mode of operation that is entered upon receiving the signal indicating that the occupation status of the parking lot (850) has changed from empty to occupied:
- executing (927) one or more first-type scans via a thermal sensor (440) over a first field of view (430) for obtaining a corresponding first-type thermal image, and evaluating the obtained first-type thermal image for identifying contiguous high-temperature pixel clusters therein,
- determining (929) whether the parked vehicle is an EV (800),
and, in the negative case:
- returning to the first mode of operation until the occupation status of the parking lot (850) changes from empty to occupied again,
and, in the positive case, entering a third mode of operation comprising:
- identifying a region (434) within the first field of view (430) of the obtained thermal image for subsequent supervision,
- performing (931), at first time intervals, second-type scans over a second field of view (432) smaller than the first field of view and including the identified region (434), while a temperature of the identified region (434) does not increase, while a temperature in the second field of view (432) outside the identified region is not higher than an ambient temperature by a predetermined first value, and while the parking lot (850) remains occupied,
wherein the method comprises entering a fourth mode of operation when the temperature of the identified region (434) increases or when the temperature in the second field of view (432) outside the identified region exceeds the ambient temperature by more than the predetermined first value, while the parking lot (850) remains occupied, the fourth mode of operation comprising:
- performing (940), at second time intervals shorter than the first time intervals, third-type scans comprising at least the identified region (434), while a temperature in any region of the area captured by the third-type scans rises or does not fall within a predetermined first number of consecutive third-type scans or within a predetermined first time period, and while the parking lot (850) remains occupied, and
- issuing (946) a first alarm signal when a temperature in any region of the area captured by the third-type scans rises by more than a predetermined second value within a predetermined second number of consecutive third-type scans or within a predetermined second time period,
or,
returning to the third mode of operation when the temperature in any region of the area captured by the third-type scans falls within the predetermined first number of consecutive third-type scans or within the predetermined first time period, while the parking lot (850) remains occupied.

2. The method of claim 1, wherein the change in the occupation status of the parking lot from empty to occupied, and/or the continued occupation of the parking lot, indicated by a signal received from an independent parking surveillance system or a corresponding sensor of a system implementing the method, and/or by a signal received from a process evaluating consecutive first-, second-, third- and fourth-type scans in the respective operating mode.

3. The method of claim 1 or 2, wherein determining (929) whether the parked vehicle is an EV (800) comprises identifying and evaluating a location of one or more contiguous high-temperature pixel clusters within the first field of view of the obtained thermal image, by evaluating changes in temperatures of contiguous pixel cluster over a number of consecutive first-type scans or a predetermined third time period and/or by receiving a signal indicating that a charging apparatus associated with the parking lot (850) is activated.

4. The method (100) of any one or more of the preceding claims, wherein identifying a region (434) within the first field of view (430) of the obtained thermal image for subsequent supervision comprises identifying a contiguous high-temperature pixel cluster in the obtained thermal image having the highest temperature.

5. The method (100) of any one or more of the preceding claims, further comprising, while in the third mode of operation, shortening the second time intervals with increasing temperature of the identified region.

6. The method (100) of any one or more of the preceding claims, further comprising, while in the fourth mode of operation, issuing a second alarm signal when a temperature in any region of the area captured by the third-type scans rises by or more than a predetermined third value within a predetermined third number of consecutive third-type scans or within a predetermined third time period after issuing the first alarm signal.

7. The method (100) of any one or more of the preceding claims, further comprising opening (925) a shutter covering at least the thermal sensor (440) and an associated optical arrangement when entering the second mode of operation, and closing the shutter when returning to the first mode of operation.

8. The method (100) of any one or more of the preceding claims, further comprising executing a cleaning process for the thermal sensor (440) and/or the associated optical arrangement in predetermined third time intervals and/or when differences between a thermal image captured for an unoccupied parking lot (850) and a reference image exceed respective predetermined thresholds.

9. A system (200) for detecting battery fires of electric or hybrid vehicles (EV) (800) in parking lots (850), the system comprising a power supply (210), a vehicle presence sensor (400), a thermal sensor array (440) and an associated lens system (420), a temperature sensor (450), a humidity sensor (480) and a controller (300) comprising one or more microprocessors (306) and associated volatile (308) and non-volatile memory (310), wherein the non-volatile memory (310) stores computer program instructions which, when executed by the one or more microprocessors (306) of the controller (300) configure the system (200) to execute the method of one or more of claims 1 to 8.

10. The system of claim 9, wherein the power supply comprises a battery (250), and wherein an energy harvesting circuit (240) is provided for recharging the battery or maintaining the battery charge.

11. Computer program product comprising computer program instructions which, when executed by a microprocessor (306) of the system (200) of one or more of claims 9 or 10, cause the microprocessor (306) to execute embodiments of the method (100) in accordance with one or more of claims 1 to 8 and to accordingly control hardware components of the system (200).

12. Computer readable medium or data carrier retrievably transmitting or storing the computer program product of claim 11.
